Europäisches Patentamt

European Patent Office

Office européen des brevets

(11) Publication number: **0 256 574 B1**

(19)

# EUROPEAN PATENT SPECIFICATION

(12)

(45) Date of publication of patent specification: **20.05.92**  (51) Int. Cl.5: **A01D  34/66**

(21) Application number: **87201305.7**

(22) Date of filing: **09.07.87**

---

(54) **A mowing machine.**

---

(30) Priority: **10.07.86 NL 8601805**

(43) Date of publication of application:
**24.02.88 Bulletin  88/08**

(45) Publication of the grant of the patent:
**20.05.92 Bulletin  92/21**

(84) Designated Contracting States:
**DE FR GB NL**

(56) References cited:
**EP-A- 0 165 624**      **FR-A- 1 483 721**
**FR-A- 2 557 418**      **NL-A- 6 909 279**
**NL-A- 8 202 988**      **US-A- 2 682 740**

(73) Proprietor: **C. van der Lely N.V.**
**Weverskade 10 P.O. Box 26**
**NL-3155 ZG Maasland(NL)**

(72) Inventor: **Van der Lely, Cornelis**
**7, Brüschenrain**
**CH-Zug(CH)**

(74) Representative: **Mulder, Herman et al**
**Octrooibureau Van der Lely N.V. Weverskade**
**10 P.O. Box 26**
**NL-3155 ZG Maasland(NL)**

Rank Xerox (UK) Business Services
(3.08/2.19/2.0)

## Description

A mowing machine comprising a plurality of detachably interconnected mowing units, which mowing units include at least one mowing member and at least one transmission element connected to a drive shaft, said mowing units are interconnected by means of a connecting member, whereby the connecting member is connected to a transmission box which comprises the transmission element, the drive shaft extends through an aperture in a drive bushing forming part of the transmission elements, said drive shaft and said drive bushing being coupled to each other rigid against rotation and said drive shaft being provided detachably in its longitudinal direction in the aperture.

A mowing machine of this kind is known from the EP-A-0165 624.

The invention contemplates to provide an advantageous mowing machine of the above-defined type wherin damaged component parts can be removed easily for repair or replacement. According to the invention, this can be achieved in that the transmission box constitutes the upper end of the mowing unit, that the connecting member is located at least near the upper ends of said mowing units and that the drive shaft has at one end a thickened portion which can be gripped to detach the drive shaft, the said one end of the drive shaft being located in a protecting box which is substantially sealed at least during operation. The invention allows of a mowing unit to be designed in such a manner that there is obtained a strong construction of the connection between the said mowing units. Consequently, the mowing machine can be provided with relatively large mowing members.

Due to the position of the transmission box near the upper end of the mowing units, the transmission box can be given such a shape that it is strong and together with the connecting member forms a strong construction for supporting the said mowing units.

The drive shaft is coupled to the transmission element such that it is connected thereto in an easily detachable manner. Thus mounting and dismounting of the mowing machine can be carried out advantageously, so that damaged component parts can be removed easily for repair. It is then possible to replace the removed elements by others. Detachment of the drive shaft can be effected in a simple way by its extending through an aperture in the drive bushing forming part of the transmission elements.

An advantageous construction is obtained when, parallel to the connecting member, there is provided a drive shaft which extends through the transmission boxes and is bearing-supported at least partly therein.

In accordance with a further construction, the connecting member is a connecting beam which is mounted by means of its lower end on the upper end of the transmission box. Thus, the mowing units can be connected to the connecting beam in a simple way.

In accordance with a still further construction of the mowing machine according to the invention, the transmission boxes and intermediate members located between the transmission boxes are arranged alternately and are interconnected, thus forming together a connecting beam. Hereby, there is obtained in a simple way a strong construction for a connecting beam interconnecting the mowing units. The transmission boxes and their intermediate members can be interconnected in a suitable manner when the connecting member is a tensile member, by means of which the transmission boxes and the intermediate members are clamped together.

The invention further relates to a construction in which between two drum-shaped conveyor members there is formed a feed-through slot, which during rotation of the drum-shaped conveyor members continuously shifts between said conveyor members. In this way the feed-through of the mown crop is influenced advantageously. An advantageous feed-through slot is obtained when the drum-shaped conveyor member is a polygon, whose sides, seen in a cross-sectional view, are spherical and face the drum shaft with their spherical sides. This results in an ample feed-through slot between two adjacent drum-shaped conveyor members, so that an adequate conveyance of the mown crop to be passed through between the drum-shaped conveyor members is ensured.

For a better understanding of the present invention and to show how the same may be carried into effect, reference will now be made, by way of example, to the accompanying drawings of two advantageous embodiments, in which:

Figure 1 is a rear view of a first embodiment of a mowing machine according to the invention;

Figure 2 shows, to an enlarged scale, part of the mowing machine of Figure 1;

Figure 3 is partly a rear view and partly a cross-sectional view of part of the mowing machine;

Figure 4 is a rear view with a partial cross-sectional view of one end of the mowing section of the mowing machine;

Figure 5 is a vertical cross-sectional view of the connecting beam of the mowing machine, taken on the line V-V in Figure 3;

Figure 6 is a horizontal cross-sectional view, taken on the line VI-VI in Figure 3;

Figure 7 is a rear view of part of a second embodiment of a mowing machine according to the invention;

Figure 8 is a plan view of the mowing machine of Figure 7, and

Figure 9 is a vertical cross-sectional view through the connecting beam of a plurality of mowing units, taken on the line IX-IX in Figure 7.

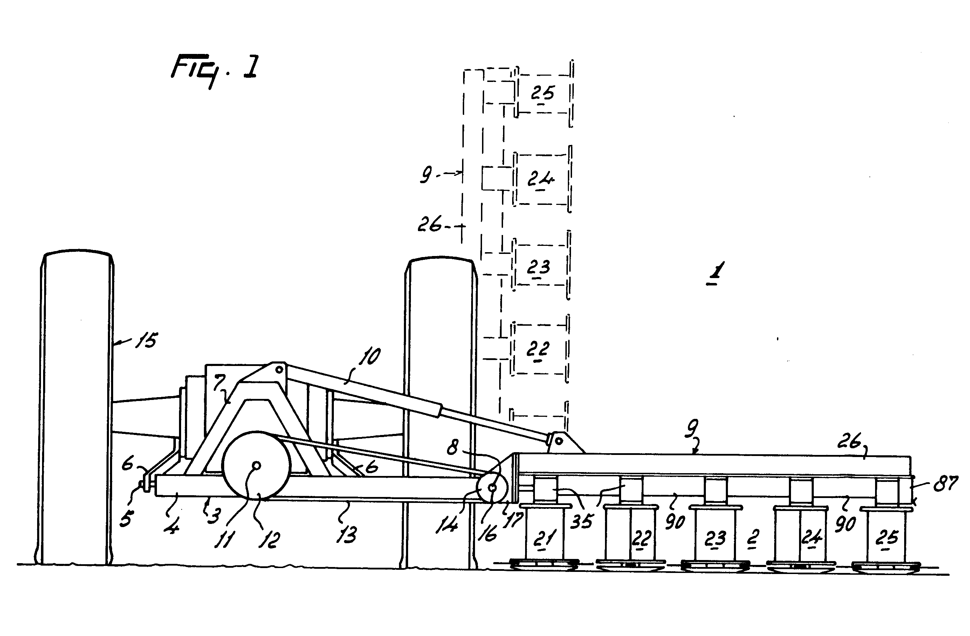

The mowing machine 1 as shown in Figures 1 to 6 comprises a mowing section 2 and a supporting section 3. The supporting section 3 has a carrier arm 4 provided with coupling members 5, by means of which the mowing machine can be coupled to the lifting arms of the lifting hitch of a tractor 15 or a suchlike vehicle. A trestle 7 is mounted on the carrier arm 4, by means of which trestle the supporting section 3 can be coupled to the top rod of the three-point lifting hitch of the tractor 15, which, however, has not been shown in further detail in the drawings. The carrier arm 4 is coupled pivotally by means of a pivotal axis 8 to a connecting beam 9, constituting a connecting member, of the mowing section 2. Between the upper side of the trestle 7 and the connecting beam 9 there is arranged a lifting member 10, which is coupled pivotally to the trestle 7 and to the connecting beam 9, the arrangement being such as is shown more in particular in Figure 1.

The supporting section 3 includes a drive shaft 11 which is bearing-supported rotatably in the carrier arm 4. The drive shaft 11 can be coupled by means of an intermediate shaft, not further shown, to the power take-off shaft of the tractor 15. The shaft 11 is provided with a rope pulley 12, around which one or more ropes 13 are passed. In addition, the ropes 13 are provided around a rope pulley 14 which is connected to a transmission shaft 16, whose centre line constitutes the pivotal axis 8. The shaft 16 is bearing-supported in a transmission box 17 which, in a manner not further shown, is attached to one end of the connecting beam 9. Preferably, the transmission box 17 is connected detachably, e.g. by means of a bolt connection, to the connecting beam 9 of the mowing section.

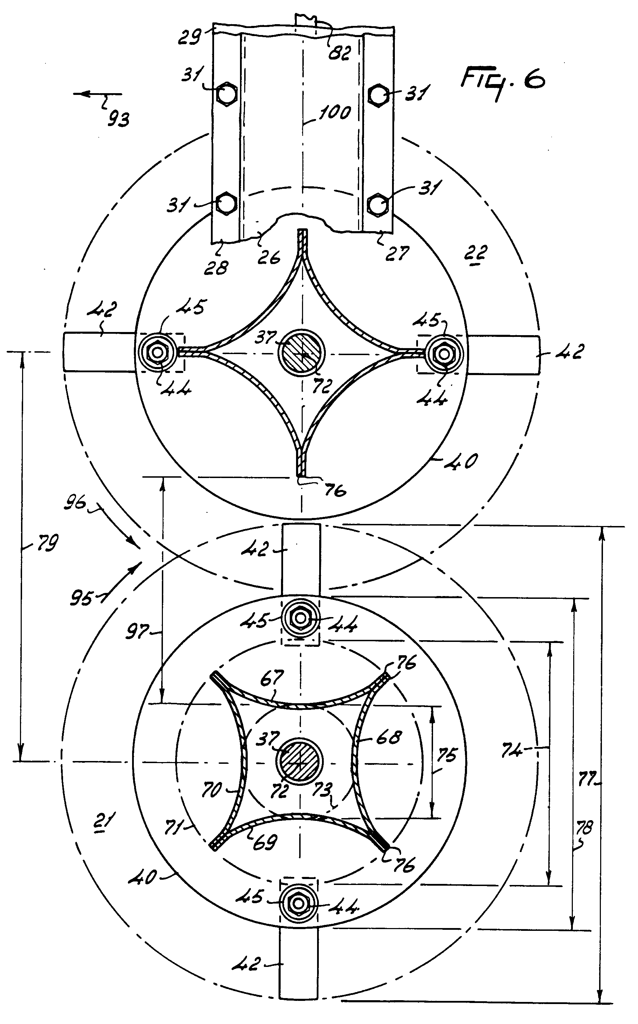

The mowing section 2 comprises five mowing units 21 to 25 which are mounted on the connecting beam 9 and are interconnected by means of same. The connecting beam 9 substantially consists of a carrier beam 26 of a U-shaped cross-section, whose legs are directed downwardly (Figure 5). The carrier beam 26 has projecting attachment edges 27 and 28. To the bottom side of the carrier beam 26 there is bolted a stiffening plate 29 by means of bolts 30 and 31. Together with the plate 29 the beam 26 forms a hollow connecting beam 9 for the mowing units.

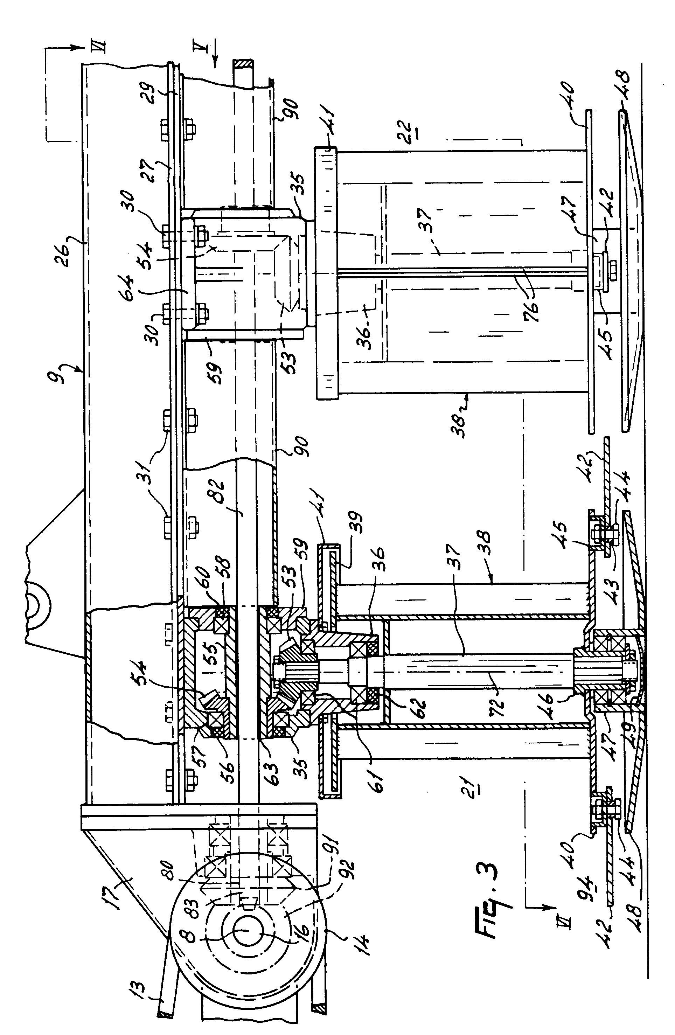

Each of the mowing units 21 to 25 includes a transmission box in the form of a gear box 35, which is bolted at its upper end by bolts 30 to the bottom side of the connecting beam 9, the arrangement being such as is shown in particular in Figures 3 and 5. The mowing units are basically of an identical structure, which for that reason is shown in Figure 3 for mowing unit 21 only. A vertical drum shaft 37 is supported in a bearing bush 36 which forms part of the bottom side of the relevant gear box 35. A drum-shaped conveyor member 38 associated with the mowing unit 21 is provided around the drum shaft 37. The conveyor member 38 has at its upper side a plate 39 and at its lower side a cutter plate 40. The plate 39 is located within a protecting plate 41 connected to the bearing bush 36. The cutter plate 40 has two diametrically opposite mowing knives 42. Each of the knives 42 is provided movably about a bushing 43 arranged around a bolt 44. The bolt 44 is connected to a cup 45 which is rigidly attached to the cutter plate 40. The cups 45 attached to the cutter plate 40, one for each knife 42, are fitted such to the plate 40 that the upper side of said cup is approximately flush with the upper side of the cutter plate 40. The cups 45 are of such a depth that the upper ends of the bolts 44 and the nuts provided thereon are completely countersunk in same, the arrangement being such as is apparent in particular from Figure 3.

The drum-shaped member 38 together with the upper plate 39 and the cutter plate 40 are connected to the drum shaft 37 rigid against rotation. The cutter plate 40 is rigidly attached to a carrier bushing 46 which is coupled to the lower end of the drum shaft 37 rigid against rotation by means of a spline connection. A supporting bushing 47 which includes a supporting dish 48 is provided rotatably on the carrier bushing 46. The bearings of the supporting bushing 47 around the carrier bushing 46 and the connecting means of the carrier bushing 46 at the lower end of the drum shaft 37 are covered in the downward direction by a cover plate 49, which is clamp-fitted within said supporting bushing 47. Thus, the mowing unit 21 includes a transmission box 35, a subjacent conveyor member 38, a mowing member 94 positioned below said conveyor member, and a supporting dish 48 positioned therebelow. In this situation, the mowing member 94 comprises the cutter plate 40 and the knives 42.

On the upper end of the drum shaft 37 extending to into the gear box 35 there is provided a conical gear wheel 53, which meshes with a conical gear wheel 54. The conical gear wheel 54 is arranged on a drive bushing 55. With a view to an easy mounting, the gear wheel 54 can be provided rigid against rotation but yet detachably about the drive bushing 55. By means of its one end, the drive bushing 55 is connected rigid against rotation to the conical gear wheel 54 which is bearing-supported in a wall of the housing of the gear box 35 by means of a bearing 57. The bearing 57 is sealed in a direction towards the outer side of said housing. The other end of the drive bushing 55 is supported by a bearing 58 in a cover 59 of the gear box 35. The bearing 58 is sealed by a seal 60. The conical gear wheel 53 and the drum shaft 37 are supported in the bearing bush 36 by means of bearings 61. The bearing bush 36 includes a seal 62 positioned against the lower bearing 61. The drive bushing 55 has an out-of-round feed-through aperture 63 which, in this embodiment, is square. The space formed within the gear box 35 and around the outer side of the drive bushing 55 constitutes a sealed space within which the conical gear wheels 53 and 55 and the bearings 57, 58 and 61 are located. In a manner not further shown, this space is provided with lubricants for the bearings 57, 58 and 61 and for the gear wheels 53 and 54 constituting the transmission members. The aperture 63 in the drive bushing 55 constitutes an aperture through the gear box 35. The gear box 35 is provided with attachment edges 64 having holes, through which bolts 30 are inserted for bolting the gear box 35 and hence the mowing unit 21 to the bottom side of the connecting beam 9. In this embodiment, each mowing unit is bolted by four bolts 30 to the connecting beam 9. This bolt connection is implemented such that the gear box 35 can also be connected to the beam 9 after rotation over 180° about the centre line 72 of the shaft 37. Figure 3 shows this position after rotation over 180° for the gear box 35 of the mowing unit 22.

Seen in a cross-sectional view (Figure 6), the drum-shaped conveyor member 38 has four folded plates 67, 68, 69 and 70. Seen in a cross-sectional view perpendicular to the shaft 37 (Figure 6), each of these identical plates is curved in accordance with the segment of a circle, the convex sides of the four plates facing the drum shaft 37. The edges 76 of the drum plates 67 to 70 are rigidly interconnected e.g. by welding and are located on an imaginary cylinder 71 arranged concentrically with the drum shaft 37 and the centre line 72 thereof. By means of their portions nearest the shaft 37, the outer sides of the drum-shaped plates 67 to 70 are located on an imaginary cylinder 73. The diameter 74 of the imaginary cylinder 71 is approximately twice the diameter 75 of the imaginary cylinder 73. The diameter 74 is approximately half the diameter 77 of the circle described by the tips of the mowing knives 42 during their rotation about the axis of rotation, formed by the centre line 72, of the mowing member 94. The mowing member 94 comprises the plate 40 and the knives 42. The cutter plate 40 has a diameter 78 which exceeds the diameter 74 and is approximately equal to two-thirds of the diameter 77.

The mowing units 21 to 25 are all substantially identical, so that only the construction of the mowing unit 21 is shown. Corresponding component parts of the mowing units 22 to 25 are indicated by the same reference numerals as for the mowing unit 21.

The mowing units 21 to 25 are all applied equidistantly to the connecting beam 9. The parallel centre lines 72 of the adjacent mowing units 21 to 25 are interspaced by a distance 79 which is approximately equal to five-sixths of the diameter 77. In this embodiment, the diameter 77 is approximately 48 cms. If so desired, this size may also be selected differently. Preferably, the ratios of the various diameters 74, 75, 77 and 78 to the distance 79 are approximately equal to the stated values. However, it is possible to opt for different ratios. In particular the stated ratio of the diameter 77 to the distance 79 will be approximately 6 : 5.

If so desired for, for example, the conveyance of mown crop between two adjacent drum-shaped members 38, the ratio of the diameters 74 and 75 relative to each other and/or relative to the diameter 77 can be selected differently. However, the stated ratios between the diameters 74, 75 and 77 are particularly advantageous.

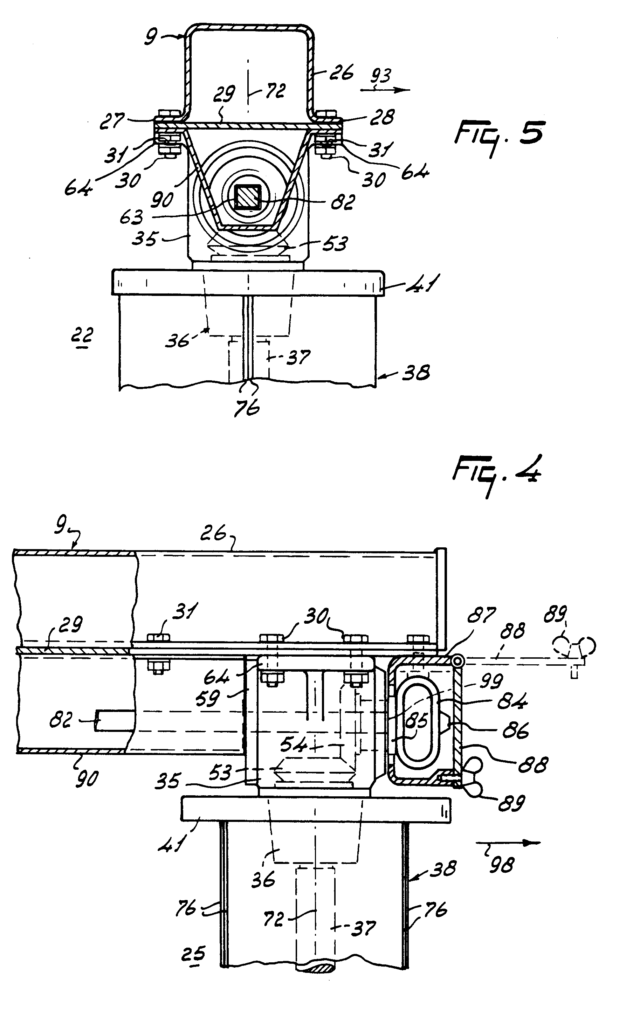

The gear wheels 53 and 54 in the gear boxes 35 of the mowing units 21 to 25, which gear wheels constitute the transmission members, are connected to a drive shaft 82. The drive shaft 82 extends through the entire length of the beam 9. The drive shaft 82 extends through the gear box 35 of all the mowing units and has one end 83 coupled to a conical gear wheel 91 which meshes with a conical gear wheel 92 fitted on the shaft 16. The conical gear wheels 91 and 92 are bearing-supported in the transmission box 17. The gear wheel 91 has an aperture 80 which corresponds to an aperture 63 in the drive bushing 55 of the gear boxes 35. The drive shaft 82 has an external cross-section which corresponds to the apertures 80 and 63 in such a manner that the shaft 82 is in driving connection with the drive bushings 55 and with the gear wheel 91. In this embodiment, the drive shaft 82 is square, but the out-of-round shape of the drive shaft 82 fitting the out-of-round shape of the apertures 63 and 80 can be chosen differently in combination with a matching shape of said apertures for a rotation-rigid connection of the drive shaft 82 to the gear wheel 91 and to the drive bushings 55. The end 99 of the drive shaft 82, remote from the end 83, is provided with a thickened portion constituting a handle 84. This handle is located outside the gear box 35 of the mowing member 25 (Figure 4). At the side facing the gear box 35, the handle 84 is provided with a supporting ring 85. At its other side the handle 84 is provided with a supporting cap 86. The handle 84 is located within a protection box 87 having a hingeable lid 88 which is lockable by means of wing nuts 89, the arrangement being such as is apparent in particular from Figure 4. The drive shaft 82 is locked against sliding because of the fact that the supporting ring 85 bears against the outer side of the gear box 35 of the mowing unit 25 and that the supporting cap 86 bears against the inner side of the lid 88 of the protection box 87. Between the gear boxes 35 of the various mowing units 21 to 25 there are provided around the drive shaft 82 covering hoods 90, which are bolted by bolts 31 to the bottom side of the connecting beam 9.

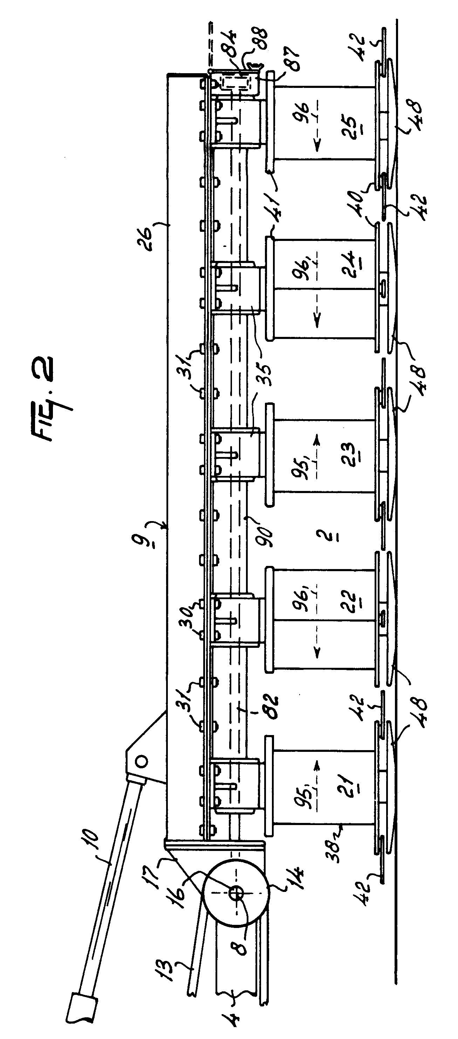

Prior to use, the mowing machine is connected to a tractor 15 or a suchlike vehicle by means of the supporting section 3, as is illustrated in Figure 1. The shaft 11 is coupled to the power take-off shaft of the tractor by means of an intermediate shaft, whilst the hydraulic lifting system 10 is connected to the hydraulic section of the tractor in a manner not further shown. When the mowing machine is made operative, it is adjusted to the position denoted by solid lines in Figure 1. Then the mowing section 2 extends transversely to the direction of operative travel 93 (Figures 5 and 6) of the mowing machine. When in use, the mowing section 2 bears at least with part of its weight on the soil via the supporting dishes 48. To start the mowing operation, the conveyor members 38 carrying the mowing members 94 are caused to rotate. This rotation is obtained from the drive shaft 11 via the ropes 13 and the rope pulley 14 to the shaft 16. The drive is transferred from the shaft 16 to the drive shaft 82 via the conical gear wheels 91 and 92. The drive shaft 82 induces the rotation of the drive bushings 35 and hence that of the conical gear wheels 54 and 53 and also that of the drum shafts 37 of the various mowing units 21 to 25. The mowing members 94 are connected to the drum shafts 37 rigid against rotation. In particular, the arrangement of the conical gear wheels 54 and 53 relative to the drive shaft 82 has been chosen such that the mowing members rotate in the desired direction of rotation about the centre lines 72 of the mowing units. The centre lines 72 of the mowing units then constitute upwardly extending axes of rotation for the mowing members 94. In this embodiment, the direction of rotation of the mowing members is chosen such that the conveyor members 38 and the mowing members 94 of the consecutive mowing units 21, 22, 23 and 24 rotate in mutually opposite directions. This rotation is such that the mowing member 94 of the mowing unit 21 rotates such that its forwardly directed side moves in a direction towards the next mowing unit 22. Consequently, the mowing member 94 of the mowing unit 21 rotates in the direction as indicated by the arrow 95 in Figure 6. The mowing member 94 of the mowing unit 22 will rotate in the opposite sense, i.e. in the direction of rotation 96. The mowing units 23 and 24 rotate in the respective directions of rotation 95 and 96, as is indicated by the broken-line arrows 95 and 96 in Figure 2. The drum-shaped conveyor members 38, co-rotating with the mowing members 94, constitute a conveyor member for the crop mown by the mowing knives 42, which mown crop is conveyed by said drum-shaped conveyor members in the directions of rotation 95 and 96, respectively. Thus, the crop mown by the mowing members of the mowing units 21 and 22 will be moved between the conveyor members 38 of said mowing units to the rear relative to the direction of operative travel 93. The crop mown by the mowing members of the mowing units 23 and 24 is conveyed to the rear between the mowing members and conveyor members of the said mowing units. The crop mown by the mowing member 94 of the mowing unit 25 is preferably not conveyed to the end of the mowing section 2. For that reason, in this embodiment comprising an odd number of mowing units, the conveyor member and the mowing member of the mowing unit 25 are rotated such that the front sides thereof move in a direction towards the other mowing units. Then the drum-shaped conveyor member cum mowing member of the mowing unit 25 will also rotate in the direction indicated by the arrow 96, as is shown in Figure 2. Consequently, the outermost mowing members and conveyor members of the mowing units 24 and 25, seen in a direction away from the supporting section 3 and the tractor 15, rotate in the same direction. As a result thereof the crop mown by the mowing member of the mowing unit 25 will be conveyed by the relevant drum-shaped member and the mowing member at the, relative to the direction of normal operative travel 93, front side of the mowing section 2 towards the mowing unit 24. Since the mowing member and the drum-shaped conveyor member of the mowing unit 24 rotate in the same direction 96, the crop mown by the mowing unit 25 will be conveyed further by the rotating parts of the mowing unit 24 in the direction indicated by the arrow 96 and be passed to the rear between the mowing unit 23 and the mowing unit 24. Due to the shape of the drum-shaped conveyor members 38 of the mowing units 24 and 25, this conveyance action of the mown crop along the front side of the space between the mowing units 24 and 25 and along the front side of the mowing section 2 will be realized in an advantageous manner, without the mown crop being moved to the rear between the mowing units 24 and 25.

The directions of rotation 95 and 96 opted for for the rotary parts of the mowing units 21 to 25 can be easily obtained by fastening the mowing unit to the connecting beam 9 in such a manner that the conical gear wheel 54 is located to the left or to the right of the axis of rotation formed by the centre line 72 of the relevant mowing unit, taken in the direction of normal operative travel 93. In Figure 3 it has been shown that the respective conical gear wheels 54 of the mowing units 21 and 22 are located at different sides of the respective axes of rotation thereof. The positioning of the conical gear wheel 54 at the other side of the relevant axis of rotation can be realized easily by bolting the gear box 35 of the relevant mowing unit in an appropriate manner to the bottom side of the connecting beam 9 by means of the bolts 30. Therefore, the four bolts, by means of which the mowing units are bolted to the bottom side of the connecting beam 9, are provided such that the gear boxes 35 can optionally be placed in one of two positions which are rotated over 180° about the axis 72. In order to facilitate the manufacture, the mowing units are of a substantially identical structure. The gear boxes 35 are identical. The desired direction of rotation can be chosen by only bolting the relevant gear boxes 35 to the connecting beam 9 in, optionally, one of the two positions shown in Figure 3.

Preferably, the mowing units are mounted on the connecting beam 9 in such a manner that the mowing knives of the adjacently located mowing units are shifted over 90° relative to each other, as is apparent in particular from Figure 6.

In the embodiment shown, the drum-shaped members of the adjacent mowing units are provided such that the edges 76 of a drum-shaped conveyor member are shifted over 45° relative to the edges 76 of the neighbouring conveyor member, as is apparent in particular from Figure 6. The edges 76 of one conveyor member are positioned such that they are shifted over 90° relative to each other around the shaft 72. Consequently, the angular displacement of the adjacent conveyor members relative to each other is equal to half the angle through which the sides 67 to 70 extend around a shaft 72. The drum-shaped conveyor members, which are formed of only four sides, have the advantage that the aperture between the adjacent drum-shaped members is of a particularly advantageous shape for conveying the mown crop between two adjacent drum-shaped members to the rear. In the region of the plane 100 containing the axes of rotation 72 of the mowing members of all mowing units, which axes in this embodiment are in alignment, a comparatively wide spacing 97 is present between the edges 76 of a drum-shaped member and the most inwardly located curved portion of a drum plate of a neighbouring conveying member. In this embodiment, the spacing 97 is equal to half the distance 79 between the axes of rotation 72 of adjacent mowing units. As is shown in Figure 6, the spacing 97 is provided near the drum shaft 37 of the mowing unit 21. When the two drum-shaped conveyor members of said mowing units 21 and 22 are rotated over 45°, then this spacing 97 is located nearer to the shaft 37 of the mowing unit 22, because of the fact that then ends 76 of the drum-shaped plates 67 to 70 of the drum-shaped member of the mowing unit 21 are located in the plane 100 and the centre of the curvature of a plate-shaped portion of the conveyor member of the mowing unit 22 is then also located in said plane. Thus, the spacing 97, which forms a feed-through slit through which the crop is discharged during rotation, will continuously be shifted somewhat between the axes of rotation 72 of the neighbouring mowing units. This will cause the crop to be deposited to the rear in a slightly spread condition, so that e.g. a proper drying of the mown crop can be obtained. The shift of the spacing 97, measured along the plane 100, during rotation of adjacent conveyor members, will be approximately of the same value as the difference between the diameters 74 and 75. Thus, in this embodiment, said shift is approximately equal to approximately one-sixth part of the distance 79 between the consecutive axes of rotation of the relevant mowing units. By choosing the curvature of the segmental drum plates 67 to 70 to be of a higher or lesser value, the distance 97 can be chosen to be correspondingly greater or lesser. In addition, associated therewith is the shift of the spacing 97 between the axes of rotation parallel to the plane 100. It is alternatively possible, by opting for a different cross-sectional shape of the drum-shaped conveyor members, to choose the spacing 97 and a shift of said spacing between the axes 72 to be different. Using the shown construction of the mowing section 2, it is possible to realize a mowing machine which is advantageous to manufacture. Then, the mowing section can be assembled from substantially identical mowing units 21 to 25, so that the number of components to be manufactured can be small. The mounting of the mowing section 2 can be effected in a simple manner by connecting the substantially identical mowing units 21 to 25 to the connecting beam 9. In substance, attention must only be paid to the fact whether the relevant gear box 35 is fastened in the desired position to the connecting beam 9 in order to obtain the desired direction of rotation of the rotary portions of the consecutive mowing units. Besides that, only the adjacent conveyor members 38 must be provided appropriately relative to each other. Although in this embodiment rotary portions of the mowing units 21 to 24 successively rotate in an opposite direction relative to each other, whereas the mowing units 24 and 25 have rotary parts which are given the same direction of rotation during operation of the mowing machine, the relevant directions of rotation may also be chosen differently. Preferably, the mowing units provided at the ends of the mowing section 2 will rotate such that the forwardly directed sides thereof move towards each other, so that the mown crop, when the machine travels in the direction indicated by the arrow 93, is deposited behind the mowing section 2 within the working width thereof. During the mowing action, the crop can also be conveyed in an appropriate manner in cooperation with the mowing members. The bolts 44, which are countersunk in the cups 45, and their nuts do not constitute parts projecting from the cutter plate 40, which might adversely affect a discharge of the crop. The fact that the supporting dishes 48 can rotate unimpededly about the axis 72 promotes an easy movement of said dishes along the soil.

Should the mowing units 21 to 25 be damaged, they can be exchanged easily for new ones. This requires only the bolts 30, in this embodiment four bolts, to be removed from the relevant mowing unit. The removal can further be effected easily by sliding the drive shaft so far into the mowing section that the relevant mowing unit is free from the drive shaft 82. For that purpose, the drive shaft 82 can be pulled away in the direction indicated by the arrow 98 (Figure 4). In that connection, the lid 88 can be hinged up to the position shown in Figure 4 by means of a broken line, for which purpose the bolts 89 must be loosened. After the drive shaft 82 has been removed to the required position, the relevant mowing unit can be removed and a new mowing unit can be bolted to the connecting beam 9. Thereafter the drive shaft 82 can be placed in position again. In particular during the mowing season when the machine is made operative, this is of the utmost importance, since then the damaged mowing unit can be exchanged rapidly for a new one and the mowing operation need only be interrupted for a short period of time. The damaged mowing unit can be repaired independently of the mowing machine. In this situation, it is advantageous for the gear boxes 35 of the mowing units to have sealed compartments in which the various transmission parts are provided together with the desired lubricants. During the interchange of a mowing unit, the lubricants cannot flow away and the transmission members and further rotary parts will remain in the appropriate manner in the gear box. Consequently, it is not necessary to effect a difficult and careful assembly of the rotary parts provided in a mowing unit when such a mowing unit is interchanged.

Due to the position of the connecting beam 9 near the upper side of the mowing units, the shape and size of the gear boxes can be chosen relatively without restrictions, independently of the mowing action. In addition, the mounting and, in particular, the interchange of mowing units in case of damage can be effected easily. Consequently, the gear boxes can be of a conveniently large size and strong enough to support the members 38, 94 and 48. For the same reason, it is possible to choose a large diameter 77. Preferably, the gear box 35 is made of cast iron.

Although in this embodiment there is shown a mowing section 2 having five mowing units, a mowing section may alternatively be provided with a different number of mowing units. A mowing section of a greater or smaller length than in accordance with this embodiment is easy to realize, as only the connecting beam 9 and the drive shaft must then be of a greater or smaller length. The mowing units can be manufactured independently of the length of the mowing section.

When the mower is to be transported, the mowing section 2 can be pivoted upwardly relative to the supporting section 3 about the pivotal axis 8. The mowing section 2 is then in the vertical position as shown in Figure 1 by means of broken lines. This displacement of the mowing section 2 relative to the supporting section 3 can be effected by means of the hydraulic lifting hitch 10, which is not shown in further detail. During operation, the hydraulic lifting hitch 10 is freely movable in its longitudinal direction such that the mowing section 2 can move freely relative to the supporting section 3 by pivoting about the pivotal axis 8 to adapt itself to the unevennesses of the soil during movement of the mowing machine in the direction of operative travel 93.

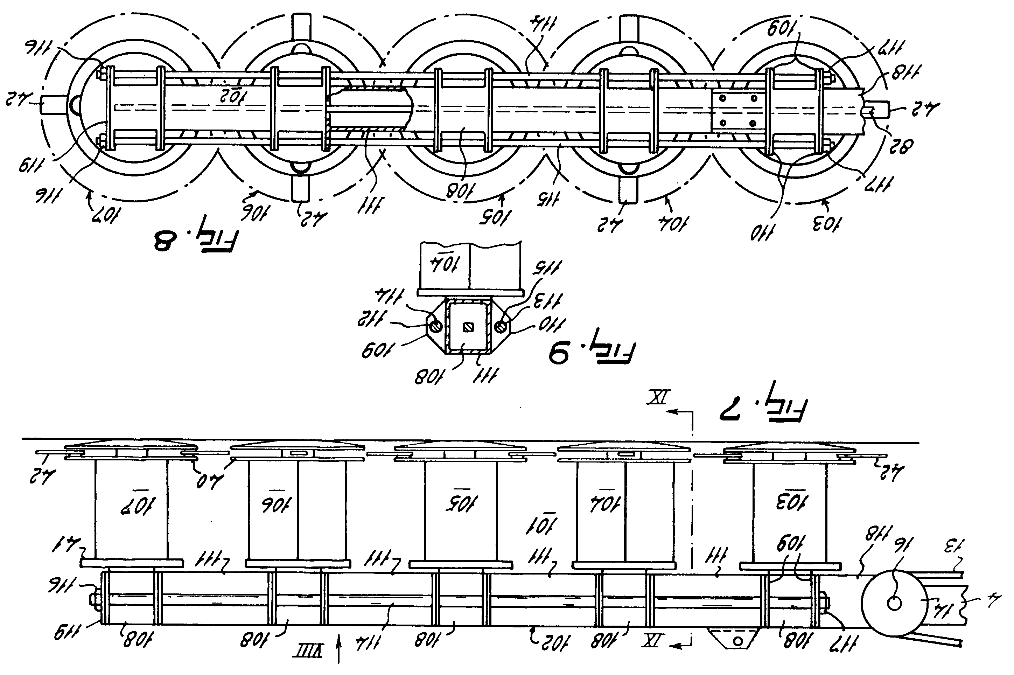

The Figures 7, 8 and 9 illustrate a different embodiment of a mowing section which can also be manufactured and mounted easily and in which the mowing units can also be exchanged rapidly for a different mowing unit in the event of damage. The Figures 7, 8 and 9 illustrate a mowing section 101 connected to a supporting section which basically may be identical to the supporting section 3 and, therefore, is not shown in further detail. The mowing section 101 includes a connecting beam 102 on which, in this embodiment, also five mowing units 103 to 107 are mounted. Basically, the mowing units 103 to 107 are similar to the mowing units 21 to 25 and for that reason are not shown in further detail in this embodiment. However, the mowing units 103 to 107 are provided at their upper sides with transmission boxes which are in the form of gear boxes 108 but formed differently from gear boxes 35. Like in the preceding embodiment, the gear boxes 108 are provided at their bottom sides with a bearing bush accommodating a drum shaft. In addition, the gear boxes 108 have two conical gear wheels and a drive bushing as in the preceding embodiment, so that the arrangement therefor is not shown in further detail. Only the shape of the gear boxes 108 differs from that of the gear box 35. In a cross-sectional view shown in Figure 9, the gear boxes 108 are rectangular, while the drive shaft 82 is passed through the centre of said gear boxes, taken in the longitudinal direction of the connecting beam 102, for the drive of the rotating component parts of the mowing units 103 to 107. The gear boxes 108 are not fitted to a rigid connecting beam, as in the preceding embodiment, but are interconnected such that they form part of a connecting beam located above the mowing members and the drum-shaped conveyor members connected thereto. As will be apparent in particular from Figure 9, the gear boxes 108 are provided at their front and rear sides, taken in the direction of normal operative travel 93, with connecting lugs 109 and 110. Said connecting lugs 109 and 110 are flush with the sides of the gear boxes 108 bearing against intermediate sections 111 provided between the consecutive gear boxes (Figure 7). The connecting lugs 109 and 110 have apertures 112 and 113 through which are passed connecting members 114 and 115 functioning as connection rods. Like the gear boxes 35, the gear boxes 108 are preferably made of cast iron, whilst the intermediate sections 111 are also preferably made of cast iron. The intermediate sections 111 form box-like portions, whose cross-sections are substantially identical to the cross-sections of the gear boxes 108, taken in a direction transversely to the longitudinal direction of the connecting beam 102. The connecting beam 102 is formed by interconnecting the gear boxes 108 and the intermediate sections 111. In this situation, the connection rods 114 and 115 constitute tensile bars by means of which the gear boxes 108 and the intermediate sections 111 are clamped against each other. For that purpose, the ends of the tensile bars 114 and 115 are provided with thread, onto which nuts 116 and 117 are screwed. It will be obvious that in principle it is sufficient to provide a nut at one end only, whilst e.g. an integral bolt head is provided at the other end.

In the embodiment of Figures 7, 8 and 9, the transmission box 17 of the preceding embodiment is replaced by a transmission box 118. Like the box 17 in the preceding embodiment, this transmission box 118 may be provided with two conical gear wheels, the drive shaft 82 fitting in the same manner as in the preceding embodiment in one of said conical gear wheels. In this embodiment, the drive shaft 82 is locked against movement in its longitudinal direction by a confinement between the end plate 119 of the connecting beam 102 and, towards the carrier arm 4, e.g. a closed end of a blind hole corresponding to the aperture 80. Like the gear boxes 35, the gear boxes 108 are sealed gear boxes containing lubricants for the rotating component parts, which also have a feed-through aperture for the drive shaft 82, similar as is shown in the preceding embodiment.

Also in this embodiment, the connecting beam 102 can be assembled easily during mounting of the mowing section 2. A damaged mowing unit can be replaced easily by detaching the connecting rods 114 and 115 and removing same so far that the gear box 108 of the relevant mowing unit can be removed, so that another mowing unit can be applied. To accomplish this, also the drive shaft must be shifted over the desired length to become disengaged of the coupling to the transmission members in the gear box of the mowing unit to be replaced. Like in the preceding embodiment, decoupling of the drive shaft from the transmission members in the gear box of the mowing unit to be removed as well as coupling of same to the transmission members in the gear box of the mowing unit to be introduced can be effected rapidly, because the drive shaft can be removed easily from the out-of-round apertures of the relevant drive bushings in the relevant gear boxes, respectively be passed therethrough. Also in this embodiment, the gear boxes 108, capable of being rotated over 180°, can be provided in optionally one of two positions between the intermediate sections so as to obtain the desired direction of rotation of the mowing members and conveyor members of the mowing units. To enable this 180° shift, the connection of the gear boxes to the tensile bars 114 and 115 must be designed adequately for the purpose. Then the tensile bars 114 and 115 are flush with each other, and in the Figures 7 to 9 at the same level as the drive shaft 82. The further mode of operation of the mowing section 101 in accordance with the second embodiment is identical to that of the first embodiment and will therefore not be indicated in further detail.

The invention is not limited to the features described in the foregoing, but also relates to all the details shown in the drawings and apparent therefrom, even if they have not been described.

## Claims

1. A mowing machine comprising a plurality of detachably interconnected mowing units (21 to 25; 103 to 107), which mowing units include at least one mowing member (94) and at leat one transmission element (53, 54) connected to a drive shaft (82), said mowing units are interconnected by means of a connecting member (9; 114, 115), whereby the connecting member is connected to a transmission box which comprises the transmission element, the drive shaft (82) extends through an aperture (63) in a drive busing (55) forming part of the transmission elements (53 to 55), said drive shaft and said drive bushing being coupled to each other rigid against rotation and said drive shaft being provided detachably in its longitudinal direction in the aperture, characterized in that the transmission box constitutes the upper end of the mowing unit, that the connecting member is located at least near the upper ends of said mowing units and that the drive shaft (82) has at one end a thickened portion (84, 85) which can be gripped to detach the drive shaft, the said one end of the drive shaft being located in a protecting box (87) which is substantially sealed at least during operation.

2. A mowing machine as claimed in claim 1, characterized in that the end of the drive shaft is provided with at least one stop (85, 86) which, during operation, bears against a support (35, 88) to prevent shifting of the drive shaft.

3. A mowing machine as claimed in claim 1 or 2, characterized in that the transmission box (35; 108) is located above the mowing member (94) of the mowing unit, the mowing member being provided on a shaft (37) which is bearing-supported in the transmission box (35; 108).

4. A mowing machine as claimed in claim 1, 2 or 3, characterized in that the connecting member (9) is a hollow beam.

5. A mowing machine as claimed in claim 4, characterized in that the connecting member includes a U-shaped beam (26), whose legs are directed downwardly and by means of their lower ends are connected to the transmission boxes (35) of the mowing units (21 to 25).

6. A mowing machine as claimed in claim 5, characterized in that the transmission boxes (35) of adjacently located mowing units (21 to 25) are spaced apart and that covering hoods (90) are provided around the drive shaft (82) between said transmission boxes.

7. A mowing machine as claimed in claim 1, 2, 3 or 4, characterized in that intermediate members are provided between adjacently located transmission boxes (108), the transmission boxes and the intermediate members are connected by the connecting member (114, 115), thus forming together a connecting beam and the said connecting member extending along the transmission box beyond the periphery thereof.

8. A mowing machine as claimed in claim 7, characterized in that the connecting member is a tensile member clamping the transmission boxes (108) and the intermediate members (111) to each other.

9. A mowing machine as claimed in any one of the preceding claims, characterized in that the connecting member (9; 114, 115) has one end connected to a supporting section (3), by means of which the mowing machine can be coupled to a tractor (15) or a suchlike vehicle.

10. A mowing machine as claimed in claim 9, characterized in that the connecting member (9; 114, 115) is mounted on a transmission box (17; 118) provided at the supporting section (3), the drive shaft (82) being coupled to transmission members in the transmission box.

11. A mowing machine as claimed in claim 9 or 10, characterized in that the supporting section (3) includes transmission members (17; 118) which are coupled to the drive shaft (82) and have a coupling shaft (11) which can be coupled to the power take-off shaft of a tractor or a suchlike vehicle.

12. A mowing machine as claimed in any one of claims 9 to 11, characterized in that the connecting member together with the mowing units provided thereon constitutes a mowing section which is connected capable of pivoting about a pivotal axis to the supporting section, the said mowing section being movable about the pivotal axis to a transport position, in which the mowing section is lockable with respect to the supporting section.

13. A mowing machine as claimed in any one of the preceding claims, characterized in that the drive shaft is out-of-round and is located slidably in a correspondingly out-of-round aperture of a drive bushing, which is provided rotatably in the transmission box, transmission elements (53, 55, 82) connected to the drive bushing being accommodated in a sealed space of this transmission box (35), said transmission members (53, 54) being connected to a mowing member (94) of the mowing unit.

14. A mowing machine as claimed in any one of the preceding claims, characterized in that a drum-shaped conveyor member (38) forming part of the relevant mowing unit is provided between the transmission box (35) and the mowing member (94).

15. A mowing machine as claimed in claim 14, characterized in that the drum-shaped conveyor member (38) is a polygon, the sides (67 to 70) of which are spherical in a cross-sectional view and face the drum shaft by means of their convex sides.

16. A mowing machine as claimed in claim 15, characterized in that between two drum-shaped conveyor members (38) there is formed a feed-through slot (97) which continuously shifts between the drums during rotation thereof.

17. A mowing machine as claimed in any one of the preceding claims, characterized in that a freely rotatable supporting dish (48) which forms part of the relevant mowing unit is provided below the mowing member (40, 42).

18. A mowing machine as claimed in any one of the preceding claims, characterized in that a mowing member (94) includes a plate-shaped carrier (40), to which at least one mowing knife (42) is connected movably, which mowing knife is provided rotatably about a bolt (43) which is countersunk in an open-ended cup (45) arranged at the plate-shaped carrier, the top side of said cup being at least substantially flush with the top side of the carrier.

**Revendications**

1. Machine faucheuse comprenant une pluralité d'unités de fauchage (21 à 25; 103 à 107) reliées entre elles de manière amovible, lesquelles unités de fauchage comprennent au moins un organe faucheur (94) et au moins un élément de transmission (53, 54) relié à un arbre d'entraînement (82), lesdites unités de fauchage sont reliées entre elles au moyen d'un organe de liaison (9; 114, 115), dans laquelle l'organe de liaison est relié à une boîte de transmission qui comprend l'élément de transmission, l'arbre d'entraînement (82) s'étend à travers une ouverture (63) dans une douille d'entraînement (55) faisant partie des éléments de transmission (53 à 55), ledit arbre d'entraînement et ladite douille d'entraînement étant couplés l'un à l'autre de manière rigide contre la rotation, et ledit arbre d'entraînement étant prévu de manière amovible dans son sens longitudinal dans l'ouverture, **caractérisée** en ce que la boîte de transmission constitue l'extrémité supérieure de l'unité de fauchage, en ce que l'organe de liaison est situé au moins auprès des extrémités supérieures desdites unités de fauchage, et en ce que l'arbre d'entraînement (82) a sur une extrémité une partie épaissie (84, 85) qui peut être saisie pour détacher l'arbre d'entraînement, ladite extrémité de l'arbre d'entraînement étant située dans une boîte de protection (87) qui est pratiquement rendue étanche, au moins pendant le fonctionnement.

2. Machine faucheuse selon la revendication 1, caractérisée en ce que l'extrémité de l'arbre d'entraînement est munie d'au moins une butée (85, 86) qui porte, pendant le fonctionnement, contre un support (35, 88) pour empêcher le déplacement de l'arbre d'entraînement.

3. Machine faucheuse selon la revendication 1 ou 2, caractérisée en ce que la boîte de transmission (35; 108) est située au dessus de l'organe faucheur (94) de l'unité de fauchage, l'organe faucheur étant prévu sur un arbre (37) qui est supporté par des paliers dans la boîte de transmission (35; 108).

4. Machine faucheuse selon la revendication 1, 2 ou 3, caractérisée en ce que l'organe de liaison (9) est une poutre creuse.

5. Machine faucheuse selon la revendication 4, caractérisée en ce que l'organe de liaison comporte une poutre (26) en forme de U dont les ailes sont dirigées vers le bas et sont reliées, au moyen de leurs extrémités inférieures, aux boîtes de transmission (35) des unités de fauchage (21 à 25).

6. Machine faucheuse selon la revendication 5, caractérisée en ce que les boîtes de transmission (35) d'unités de fauchage (21 à 25) situées en positions adjacentes sont espacées entre elles et que des capots (90) de recouvrement sont prévus autour de l'arbre d'entraînement (82) entre lesdites boîtes de transmission.

7. Machine faucheuse selon les revendications 1, 2, 3 ou 4, caractérisée en ce que des éléments intermédiaires sont prévus entre des boîtes de transmission (108) situées en positions adjacentes, les boîtes de transmission et les organes intermédiaires sont reliés par l'organe de liaison (114, 115) en formant ainsi ensemble une poutre de liaison, et ledit organe de liaison s'étendant le long de la boîte de transmission, au delà de la périphérie de celle-ci.

**8.** Machine faucheuse selon la revendication 7, caractérisée en ce que l'organe de liaison est un organe de traction serrant l'un sur l'autre les boîtes de transmission (108) et les organes intermédiaires (111).

**9.** Machine faucheuse selon l'une quelconque des revendications précédentes, caractérisée en ce que l'organe de liaison (9; 114, 115) a une extrémité reliée à une section de support (3) au moyen de laquelle la machine faucheuse peut être attelée à un tracteur (15) ou à un véhicule analogue.

**10.** Machine faucheuse selon la revendication 9, caractérisée en ce que l'organe de liaison (9; 114, 115) est monté sur une boîte de transmission (17; 118) prévue sur la section de support (3), l'arbre d'entraînement (82) étant couplé à des organes de transmission dans la boîte de transmission.

**11.** Machine faucheuse selon la revendication 9 ou 10, caractérisée en ce que la section de support (3) comprend des organes de transmission (17; 118) qui sont couplés à l'arbre d'entraînement (82) et ont un arbre d'accouplement (11) qui peut être couplé à l'arbre de prise de force d'un tracteur ou d'un véhicule analogue.

**12.** Machine faucheuse selon l'une quelconque des revendications 9 à 11, caractérisée en ce que l'organe de liaison constitue, ensemble avec les unités de fauchage prévues sur lui, une section de fauchage qui est reliée à la section de support en étant capable de pivoter autour d'un axe de pivotement, ladite section de fauchage étant mobile autour de l'axe de pivotement jusqu'en une position de transport dans laquelle la section de fauchage est verrouillable par rapport à la section de support.

**13.** Machine faucheuse selon l'une quelconque des revendications précédentes, caractérisée en ce que l'arbre d'entraînement a une section non circulaire et est situé de manière coulissante dans une ouverture ayant une section non circulaire correspondante dans une douille d'entraînement, qui est prévue rotative dans la boîte de transmission, des éléments de transmission (53, 55, 82) reliés à la douille d'entraînement étant logés dans un espace étanche de cette boîte de transmission (35), lesdits organes de transmission (53, 54) étant reliés à un organe faucheur (94) de l'unité de fauchage.

**14.** Machine faucheuse selon l'une quelconque des revendications précédentes, caractérisée en ce qu'un organe transporteur (38) en forme de tambour faisant partie de l'unité de fauchage correspondante est prévu entre la boîte de transmission (35) et l'organe faucheur (94).

**15.** Machine faucheuse selon la revendication 14, caractérisée en ce que l'organe transporteur (38) en forme de tambour est un polygone dont les côtés (67 à 70) sont sphériques en étant vus en coupe transversale et font face à l'arbre du tambour au moyen de leurs côtés convexes.

**16.** Machine faucheuse selon la revendication 15, caractérisée en ce qu'une fente de passage (97) est ménagée entre deux organes transporteurs (38) en forme de tambours, cette fente se déplaçant continuellement entre les tambours pendant leur rotation.

**17.** Machine faucheuse selon l'une quelconque des revendications précédentes, caractérisée en ce qu'un plateau de support (48) pouvant tourner librement, faisant partie de l'unité de fauchage correspondante, est prévu sous l'organe faucheur (40, 42).

**18.** Machine faucheuse selon l'une quelconque des revendications précédentes, caractérisée en ce qu'un organe faucheur (94) comprend un élément porteur (40) en forme de plateau, auquel est relié, de manière mobile, au moins un couteau faucheur (42), lequel couteau faucheur est prévu rotatif autour d'un boulon (43) qui est noyé dans une cuvette (45) ouverte à une de ses extrémités, agencée dans l'élément porteur en forme de plateau, le côté supérieur de ladite cuvette étant au moins pratiquement au niveau de la face supérieure de l'élément porteur.

**Patentansprüche**

**1.** Mähmaschine mit einer Mehrzahl von lösbar miteinander verbundenen Mäheinheiten (21 bis 25; 103 bis 107), die jeweils mindestens ein Mähteil (94) und mindestens ein mit einer Antriebswelle (82) verbundenes Antriebselement (53, 54) aufweisen und durch ein Verbindungsteil (9; 114, 115) verbunden sind, das mit einem Getriebegehäuse verbunden ist, welches das Antriebselement enthält; die Antriebswelle (82) erstreckt sich durch eine Öffnung (63) einer Antriebsbuchse (55), die Bestandteil der Antriebselemente (53 bis 55) ist; die Antriebswelle und die Antriebsbuchse sind drehfest miteinander verbunden und die Antriebswelle ist in ihrer Längsrichtung lösbar in der Öffnung angeordnet, dadurch gekennzeichnet, daß das Getriebegehäuse das obere Ende der Mäheinheit bildet, daß das Verbindungsglied mindestens nahe den oberen Enden der Mäheinheiten angeordnet ist, daß die Antriebswelle (82) an einem Ende einen verdickten Abschnitt (84, 85) aufweist, der zum Entfernen der Antriebswelle zu erfassen ist, und daß sich das genannte eine Ende der Antriebswelle in einem Schutzkasten (87) befindet, der wenigstens im Betrieb im wesentlichen abgedichtet ist.

2. Mähmaschine nach Anspruch 1, dadurch gekennzeichnet, daß das Ende der Antriebswelle mit mindestens einem Anschlag (85, 86) versehen ist, der während des Betriebs an einer Stütze (35, 88) anliegt, um eine Verlagerung der Antriebswelle zu vermeiden.

3. Mähmaschine nach Anspruch 1 oder 2, dadurch gekennzeichnet, daß das Getriebegehäuse (35; 108) oberhalb des Mähteiles (94) der Mäheinheit angeordnet ist, und daß das Mähteil auf einer Welle (37) angebracht ist, die in dem Getriebegehäuse (35; 108) abgestützt gelagert ist.

4. Mähmaschine nach Anspruch 1, 2 oder 3, dadurch gekennzeichnet, daß das Verbindungsteil (9) ein hohler Balken ist.

5. Mähmaschine nach Anspruch 4, dadurch gekennzeichnet, daß das Verbindungsteil einen U-förmigen Balken (26) aufweist, dessen Schenkel nach unten gerichtet und mit ihren unteren Enden mit den Getriebegehäusen (35) der Mäheinheiten (21 bis 25) verbunden sind.

6. Mähmaschine nach Anspruch 5, dadurch gekennzeichnet, daß die Getriebegehäuse (35) benachbarter Mäheinheiten (21 bis 25) Abstand voneinander haben, und daß die Antriebswelle (82) zwischen den Getriebegehäusen von Verkleidungen (90) umgeben ist.

7. Mähmaschine nach Anspruch 1, 2, 3 oder 4, dadurch gekennzeichnet, daß zwischen benachbarten Getriebegehäusen (108) Zwischenglieder vorhanden sind, daß die Getriebegehäuse und die Zwischenglieder mittels der Verbindungsteile (114, 115) verbunden sind und dadurch gemeinsam einen Verbindungsbalken bilden, und daß sich das Verbindungsglied entlang des Getriebegehäuses außerhalb von dessen Peripherie erstreckt.

8. Mähmaschine nach Anspruch 7, dadurch gekennzeichnet, daß das Verbindungsteil ein Zugglied ist, das die Getriebegehäuse (108) und die Zwischenglieder (111) gegeneinander verspannt.

9. Mähmaschine nach einem der vorhergehenden Ansprüche, dadurch gekennzeichnet, daß das Verbindungsteil (9; 114; 115) mit einem Ende mit einem Träger (3) verbunden ist, mit dem die Mähmaschine an einen Schlepper (15) oder ein ähnliches Fahrzeug angeschlossen werden kann.

10. Mähmaschine nach Anspruch 9, dadurch gekennzeichnet, daß das Verbindungsteil (9; 114, 115) an einem Getriebegehäuse (17; 118) befestigt ist, das an dem Träger (3) angebracht ist, und daß die Antriebswelle (82) mit den Getriebegeliedern in dem Getriebegehäuse gekuppelt ist.

11. Mähmaschine nach Anspruch 9 oder 10, dadurch gekennzeichnet, daß der Träger (3) Getriebeglieder (17; 118) aufweist, die mit der Antriebswelle (82) gekuppelt sind und zu denen eine Kupplungswelle (11) gehört, die mit der Zapfwelle eines Schleppers oder eines ähnlichen Fahrzeuges gekuppelt werden kann.

12. Mähmaschine nach einem der Ansprüche 9 bis 11, dadurch gekennzeichnet, daß das Verbindungsteil zusammen mit den an ihm angebrachten Mäheinheiten ein Mähwerk bildet, das um eine Schwenkachse schwenkbar mit dem Träger verbunden und um die Schwenkachse in eine Transportstellung bewegbar ist, in der das Mähwerk in bezug auf den Träger verriegelbar ist.

13. Mähmaschine nach einem der vorhergehenden Ansprüche, dadurch gekennzeichnet, daß die Antriebswelle unrund und in einer entsprechend unrunden Öffnung einer Antriebsbuchse verschiebbar ist, die in dem Getriebegehäuse drehbar angeordnet ist, daß mit der Antriebsbuchse verbundene Getriebeglieder (53, 55, 82) in einem abgedichteten Raum des Getriebegehäuses (35) angeordnet sind, und daß die Getriebeglieder (53, 54) mit einem Mähteil (94) der Mäheinheit verbunden sind.

14. Mähmaschine nach einem der vorhergehenden Ansprüche,
dadurch gekennzeichnet, daß ein trommelförmiges Förderteil (38) als Bestandteil der betreffenden Mäheinheit zwischen dem Getriebegehäuse (35) und dem Mähteil (94) angeordnet ist.

15. Mähmaschine nach Anspruch 14,
dadurch gekennzeichnet, daß das trommelförmige Förderteil (38) ein Polygon ist, dessen Seiten (67 bis 70) im Querschnitt sphärisch und mit ihren konvexen Seiten der Trommelachse zugekehrt sind.

16. Mähmaschine nach Anspruch 15,
dadurch gekennzeichnet, daß zwischen zwei trommelförmigen Förderteilen (38) ein Durchgangsspalt (97) gebildet ist, der sich zwischen den Trommeln während deren Rotation fortlaufend verlagert.

17. Mähmaschine nach einem der vorhergehenden Ansprüche,
dadurch gekennzeichnet, daß unter dem Mähteil (40, 42) ein frei drehbarer Stützteller (48) angeordnet ist, der Bestandteil der betreffenden Mäheinheit ist.

18. Mähmaschine nach einem der vorhergehenden Ansprüche,
dadurch gekennzeichnet, daß ein Mähteil (94) einen plattenförmigen Träger (40) aufweist, an dem mindestens ein Mähmesser (42) beweglich angebracht ist, das um einen Bolzen (43) schwenkbar ist, der versenkt in einem oben offenen Napf angeordnet ist, dessen Oberseite mindestens im wesentlichen bündig mit der Oberseite des Trägers liegt.

FIG. 1

EP 0 256 574 B1

FIG. 2

EP 0 256 574 B1

Fig. 3

EP 0 256 574 B1

FIG. 5

FIG. 4

FIG. 6

FIG. 7

FIG. 9

FIG. 8

EP 0 256 574 B1